(19) Europäisches Patentamt
European Patent Office
Office européen des brevets

(11) EP 4 134 245 A1

(12) **EUROPEAN PATENT APPLICATION**
published in accordance with Art. 153(4) EPC

(43) Date of publication:
**15.02.2023 Bulletin 2023/07**

(21) Application number: **21809098.3**

(22) Date of filing: **17.05.2021**

(51) International Patent Classification (IPC):
***B60C 1/00*** *(1968.09)* ***C08L 9/00*** *(1974.07)*
***B60C 11/00*** *(1968.09)* ***B60C 11/03*** *(1985.01)*
***B60C 11/13*** *(1995.01)*

(52) Cooperative Patent Classification (CPC):
**B60C 1/00; B60C 11/00; B60C 11/03; B60C 11/13; C08L 9/00**

(86) International application number:
**PCT/JP2021/018657**

(87) International publication number:
**WO 2021/235400 (25.11.2021 Gazette 2021/47)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **21.05.2020 JP 2020088664**

(71) Applicant: **Sumitomo Rubber Industries, Ltd.**
**Kobe-shi, Hyogo 651-0072 (JP)**

(72) Inventor: **NAKAMURA Kentaro**
**Kobe-shi, Hyogo 651-0072 (JP)**

(74) Representative: **Manitz Finsterwald**
**Patent- und Rechtsanwaltspartnerschaft mbB**
**Martin-Greif-Strasse 1**
**80336 München (DE)**

(54) **PNEUMATIC TIRE**

(57) Provided is a pneumatic tire having sufficiently improved wet grip performance in a low-temperature environment compared to conventional products. A pneumatic tire comprising a tread in which at least two circumferential main grooves continuously extending in the circumferential direction of the tire are formed, wherein the tread has a plurality of transverse grooves that are wider at a center portion thereof than at an end portion thereof and are each formed in a land section delimited in the width direction of the tire by adjacent two of the circumferential main grooves, at least one of rubber layers forming the tread contains, as rubber components, an isoprene rubber and a styrene-butadiene rubber which has a styrene content of at most 30% by mass and in which the vinyl linked amount in the butadiene portion is at most 40% by mass, and a local maximum (peak) of the loss tangent (tanδ) is present in the range of -20°C to 0°C, as measured at a frequency of 10 Hz, an initial strain of 2%, and a dynamic strain rate of 1%.

[FIG.1]

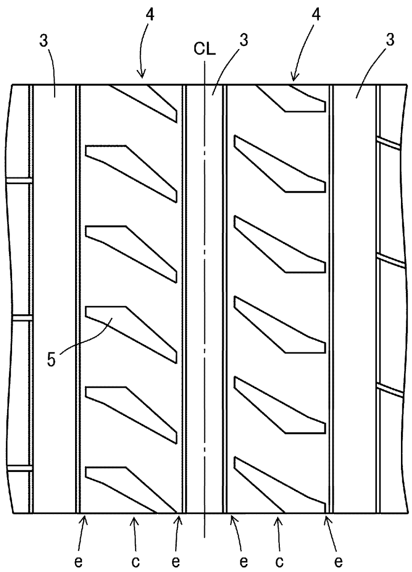


EP 4 134 245 A1

## Description

[TECHNICAL FIELD]

The present invention relates to a pneumatic tire, specifically, a pneumatic tire having excellent wet grip performance in a low temperature environment.

[BACKGROUND ART]

In recent years, with the progress of speeding up of vehicles, there is an increasing demand for improving wet grip performance of pneumatic tires (hereinafter, also simply referred to as "tires"), especially in a low temperature environment, specifically, in a low temperature environment of less than 10 °C, in Japan.

Under such circumstances, studies on tread rubber (Patent Documents 1 and 2) and studies on tread shape (Patent Documents 3 and 4) have been conducted for the purpose of improving wet grip performance.

[PRIOR ART DOCUMENTS]

[PATENT DOCUMENTS]

[Patent Document 1] Japanese Patent No. 5499769
[Patent Document 2] International Publication No. 2017-104423
[Patent Document 3] JP 2017-19494 A
[Patent Document 4] JP 2019-199206 A

[SUMMARY OF INVENTION]

[PROBLEM TO BE SOLVED BY THE INVENTION]

However, with the above-mentioned conventional technique, it cannot be said that the wet grip performance in a low temperature environment has been sufficiently improved, and further improvement is required.

Therefore, an object of the present invention is to provide a pneumatic tire in which the wet grip performance in a low temperature environment is sufficiently improved as compared with the conventional one.

[MEANS FOR SOLVING THE PROBLEM]

The present inventor has diligently studied the solution to the above-mentioned problem, found that the above-mentioned problem can be solved by the invention described below, and has completed the present invention.

The invention according to claim 1 is;

a pneumatic tire having a tread having two or more circumferential main grooves extending continuously in the circumferential direction of the tire, wherein
plurality lateral grooves are formed in a land portion in the tread divided in the tire width direction by the two adjacent circumferential main grooves so as to be wider on the central portion side than on the end side;
at least one layer of the rubber layer forming the tread is formed by a rubber composition
which contains a styrene-butadiene rubber having a styrene content of 30% by mass or less and a vinyl bond content of 40% by mass or less in the butadiene portion, and an isoprene rubber as rubber components; and
in which the loss tangent (tan $\delta$ ) measured under the conditions of a frequency of 10 Hz, an initial strain of 2% and a dynamic strain ratio of 1% shows a maximum value (peak) in the range of -20°C or higher and 0°C or lower.

The invention according to claim 2 is
the pneumatic tire according to claim 1, wherein the amount of isoprene-based rubber in 100 parts by mass of the rubber component is 10 parts by mass or more and 60 parts by mass or less, in the rubber composition.

The invention according to claim 3 is
the pneumatic tire according to claim 2, wherein the amount of isoprene-based rubber in 100 parts by mass of the rubber component is 20 parts by mass or more and 40 parts by mass or less, in the rubber composition.

The invention according to claim 4 is

the pneumatic tire according to any one of claims 1 to 3, wherein the amount of styrene-butadiene rubber in 100 parts by mass of the rubber component is 50 parts by mass or more and 60 parts by mass or less, in the rubber composition.

The invention according to claim 5 is

the pneumatic tire according to any one of claims 1 to 4, wherein, in the rubber composition,
butadiene-based rubber is further added to the rubber component; and
amount of the butadiene-based rubber in 100 parts by mass of the rubber component is 10 parts by mass or more and 30 parts by mass or less.

The invention according to claim 6 is
the pneumatic tire according to any one of claims 1 to 5, wherein the rubber composition contains a resin component of more than 5 parts by mass and less than 40 parts by mass with respect to 100 parts by mass of the rubber component.

The invention according to claim 7 is
the pneumatic tire according to claim 6, wherein the resin component is a terpene-based resin.

The invention according to claim 8 is
the pneumatic tire according to any one of claims 1 to 7, wherein the rubber composition contains silica of 40 parts by mass or more and 200 parts by mass or less with respect to 100 parts by mass of the rubber component.

The invention according to claim 9 is
the pneumatic tire according to claim 8, wherein the silica has a nitrogen adsorption specific surface area of $150 m^2/g$ or more.

The invention according to claim 10 is
the pneumatic tire according to claim 8 or 9, wherein the rubber composition contains a silane coupling agent.

The invention according to claim 11 is
the pneumatic tire according to claim 10, wherein the content of the silane coupling agent in the rubber composition is 3.0 parts by mass or more and 10.0 parts by mass or less with respect to 100 parts by mass of the rubber component.

The invention according to claim 12 is
the pneumatic tire according to claim 11, wherein the content of the silane coupling agent in the rubber composition is 4.5 parts by mass or more and 7.0 parts by mass or less with respect to 100 parts by mass of the rubber component.

The invention according to claim 13 is
the pneumatic tire according to any one of claims 10 to 12, wherein the rubber composition contains a mercapto-based silane coupling agent as a silane coupling agent.

The invention according to claim 14 is

the pneumatic tire according to any one of claims 1 to 13, wherein
the loss tangent (tan $\delta$ ) of the rubber composition measured under the conditions of a frequency of 10 Hz, an initial strain of 2%, and a dynamic strain ratio of 1% has a maximum value (peak) within a range of -15°C or higher and 0°C or lower.

The invention according to claim 15 is
the pneumatic tire according to any one of claims 1 to 14, wherein the tread is formed of plurality rubber layers; and the rubber composition is used for the cap rubber layer of the tread.

The invention according to claim 16 is
the pneumatic tire according to any one of claims 1 to 15, wherein when the width of the lateral groove on the end side of the circumferential main groove is A (mm) and the width on the center side is B (mm), $1.0 \leq B / A \leq 40.0$ is satisfied.

The invention according to claim 17 is
the pneumatic tire according to claim 16, wherein $5.0 \leqq B / A \leqq 35.0$ is satisfied.

The invention according to claim 18 is

the pneumatic tire according to any one of claims 1 to 17, wherein,
when the tire is installed on a standardized rim and the internal pressure is the standardized internal pressure, the cross-sectional width of the tire is Wt (mm) and the outer diameter is Dt (mm), $1963.4 \leq (Dt^2 \times \pi/4)/Wt \leq 2827.4$ is satisfied.

The invention according to claim 19 is
the pneumatic tire according to any one of claims 1 to 18, wherein the tire is a pneumatic tire for a passenger car.

[THE EFFECT OF THE INVENTION]

According to the present invention, it is possible to provide a pneumatic tire in which the wet grip performance in a low temperature environment is sufficiently improved as compared with the conventional tire.

[BRIEF DESCRIPTION OF DRAWINGS]

[FIG. 1] This figure is an example of a schematic development view showing a form of a ground contact surface of the tread of a pneumatic tire according to an embodiment of the present invention.
[FIG. 2] This figure is another example of a schematic development view showing a form of a ground contact surface of the tread of a pneumatic tire according to an embodiment of the present invention.
[FIG.3] This figure is a schematic development view showing a form of a ground contact surface of the tread of a conventional pneumatic tire.
[FIG. 4] This figure is a schematic development view showing a modified example of the ground contact surface of the tread shown in FIG. 1.

[EMBODIMENTS FOR CARRYING OUT THE INVENTION]

Hereinafter, the present invention will be specifically described based on the embodiments.

[1] Features of the tire of the present invention

First, the features of the tire according to the present invention will be described.

The present inventor considered that, in order to improve the wet grip performance in a low temperature environment, not studying the tread shape or the tread rubber individually, but each of them needs to satisfy certain conditions. Then, various experiments and studies were carried out, and the present invention was completed.

That is, in the tire according to the present invention, first, regarding the tread shape, two or more circumferential main grooves extending continuously in the tire circumferential direction are formed, and plurality lateral grooves are formed in the land portion divided in the tire width direction by two adjacent circumferential main grooves so as to be wider on the central portion side than on the end side.

Next, regarding the tread rubber, at least one of the rubber layers forming the tread contains a styrene-butadiene rubber having a styrene content of 30% by mass or less and a vinyl bond content of 40% by mass or less in the butadiene portion, and an isoprene-based rubber as a rubber component; and the rubber layer is formed by a rubber composition in which the loss tangent (tan $\delta$) measured under the conditions of a frequency of 10 Hz, an initial strain of 2%, and a dynamic strain ratio of 1% shows a maximum value (a peak) within the range of -20°C or higher and 0°C or lower.

By using such a tread shape and a tread rubber, in cooperation with each other, it is possible to provide a pneumatic tire having sufficiently improved wet grip performance in a low temperature environment.

When the tread is formed of plurality rubber layers such as a cap rubber layer and a base rubber layer, this rubber composition is preferably used for the cap rubber layer.

[2] Embodiment of the present invention

Hereinafter, the present invention will be specifically described based on the embodiments.

As described above, the tire of the present embodiment has a tread in which two or more circumferential main grooves extending continuously in the tire circumferential direction are formed, and plurality lateral grooves are formed in the land portion divided in the tire width direction by two adjacent circumferential main grooves so as to be wider on the central portion side than on the end side.

The rubber component constituting the rubber composition of the tread has a low glass transition temperature (Tg), and, when running in a low temperature environment, the difference between the hardness of the rubber component and the hardness of the other components becomes large, and stress tends to concentrate on the interface. Then, this stress concentration causes chipping in the land portion of the tread on the ground contact surface, which causes a decrease in the ground contact area, which may reduce the wet braking performance. This chipping is particularly likely to occur on the end side near the circumferential main groove.

Therefore, in the present embodiment, the lateral groove is formed in a shape that is wider on the central portion side than on the end portion side. As a result, the ground contact area on the end side near the circumferential main groove becomes large, so that the occurrence of chipping on the land end side of the ground contact surface is suppressed,

and the wet braking performance in a low temperature environment can be fully exhibited.

Specifically, FIG. 1 and FIG. 2 are examples of schematic development views showing the form of the ground contact surface of the tread of the pneumatic tire according to the present embodiment, respectively. And FIG. 3 is an example of a schematic development view which shows the form of the ground contact surface of the tread of a conventional tire. In FIGs. 1 to 3, 3 is a circumferential main groove, 4 is a land portion, and 5 is a lateral groove. And CL is a center line indicating the center of the tread. Further, c refers to the central portion side of the lateral groove 5, and e refers the end portion side of the lateral groove 5.

As shown in FIGs. 1 to 3, each tire has a tread having two or more (three in FIGs. 1 to 3) circumferential main grooves 3 extending continuously in the tire circumferential direction. The land portion 4 is divided in the tire width direction by two adjacent circumferential main grooves. A plurality of lateral grooves 5 are formed in the land portion 4.

In the present embodiment, as shown in FIG. 1 and FIG. 2, the lateral groove 5 is formed to be wider on the central portion side c than on the end portion side e. By forming the lateral groove 5 in such a shape, the ground contact area on the end side e near the circumferential main groove 3 becomes large, so that the occurrence of chipping on the end side e is suppressed and the wet braking performance in a low temperature environment can be fully exhibited.

It is considered that, in the case of the lateral groove 5 which is wider in the central portion side c than the end portion side e, the ground contact area increases and the stress is distributed to the wide central portion side c as well, so that concentration of the stress on the end portion side e is relieved and the occurrence of chipping is suppressed.

On the other hand, in the conventional tire, as shown in FIG. 3, the shape of the lateral groove 5 is not formed to be wider on the central portion side c than on the end side e, so that the occurrence of chipping is easily caused in the end side e in a low temperature environment.

In the present embodiment, the lateral groove 5 may be in a completed state in the land portion 4, that is, in a state of not being connected to the circumferential main groove 3 as shown in FIG. 1, or may be in a state of being connected to the circumferential main groove 3, as shown in FIG. 2. Then, as shown in FIG. 4, the lateral groove 5 and the circumferential main groove 3 may be connected via the branch groove 10. Further, the direction in which the lateral groove 5 is provided may be an oblique direction with respect to the circumferential main groove 3 as shown in FIGS. 1 and 2, but may be an orthogonal direction.

In the present embodiment, when the lateral groove is formed so that the B/A of is 1.0 or more and 40.0 or less, more preferably 5.0 or more and 35 or less, wherein the width on the end side is A (mm) and the width on the center side is B (mm), a sufficiently large ground contact area can be secured on the end side. When the width of the lateral groove gradually decreases toward the end in the width direction and the width of the end becomes 0, the above-mentioned "width on the end side" refers to the width of the lateral groove at a position 10% inside the length of the lateral groove in the tire width direction from the end of the circumferential main groove.

In the above, the "circumferential main groove" refers to a groove having a cross-sectional area of 10 $mm^2$ or more in the tire width direction.

The "ground contact surface" refers to the all-around outer circumference surface of the tire that comes to contact with the road surface when the tire is assembled to the standardized rim and rolled under the standardized load while the tire is filled with the standardized internal pressure. Specifically, for example, it can be obtained by assembling the tire to the standardized rim, applying the standardized internal pressure, allowing the tire to stand at 25°C for 24 hours, followed by applying ink on the surface of the tread, pressing the tire to a thick paper with applying the standardized load, and to transfer the ink to the paper.

Hear, the "standardized rim" is a rim defined for each tire in the standard system including the standard on which the tire is based. For example, in the case of JATMA (Japan Automobile Tire Association), it is the standard rim in applicable sizes described in the "JATMA YEAR BOOK", in the case of "ETRTO (The European Tire and Rim Technical Organization)", it is "Measuring Rim" described in "STANDARDS MANUAL", and in the case of TRA (The Tire and Rim Association, Inc.), it is "Design Rim" described in "YEAR BOOK ". In the case of tires that are not specified in the standard, it refers a rim that can be assembled and can maintain internal pressure, that is, the rim that does not cause air leakage from between the rim and the tire, and has the smallest rim diameter, and then the narrowest rim width.

The "standardized internal pressure" is the air pressure defined for each tire by the standard. In the case of JATMA, it is the maximum air pressure, in the case of TRA, it is the maximum value described in the table "TIRE LOAD LIMITS AT VARIOUS COLD INFLATION PRESSURES", and in the case of ETRTO, it is "INFLATION PRESSURE".

Further, the "standardized load" is a load defined for each tire in the standard system including the standard on which the tire is based, and means the maximum mass that can be loaded on the tire. In the case of JATMA, it is the maximum load capacity, in the case of TRA, it is the maximum value described in the table "TIRE LOAD LIMITS AT VARIOUS COLD INFLATION PRESSURES", and in the case of ETRTO, it is "LOAD CAPACTY".

Further, in the present embodiment, the groove width of the lateral groove refers to the distance in the width direction perpendicular to the center line of the lateral groove on the ground contact surface obtained when the tire in the standardized state is pressed with the standardized load at a camber angle of 0 degree.

2. Tread rubber

Next, in the tire of the present embodiment, as described above, at least one layer of the rubber layer forming the tread contains a styrene-butadiene rubber having a styrene content of 30% by mass or less and a vinyl bond content of 40% by mass or less in the butadiene portion and an isoprene rubber as rubber components, and the rubber layer is formed by a rubber composition in which the loss tangent (tanδ) measured under the conditions of frequency of 10 Hz, initial strain of 2% and a dynamic strain ratio of 1% shows a maximum value (peak) in the range of -20°C or higher and 0°C or lower.

Styrene-butadiene rubber, such as SBR, having a small amount of styrene of 30% by mass or less and a vinyl bond amount of 40% by mass or less in the butadiene portion, has low polarity and therefore is excellent in compatibility with isoprene rubber such as natural rubber (NR). By blending different types of rubber having good compatibility into the rubber component in this way, both the followability to the road surface and the frictional property with the road surface can be realized at the same time.

Furthermore, by designing the tread rubber so that the loss tangent (tan δ) shows a maximum value (peak) within the range of -20°C or higher and 0°C or lower, that is, by designing the glass transition temperature Tg to be high, since the rigidity of the rubber can be increased when braking, good wet braking performance can be obtained even in a low temperature environment.

In the present embodiment, tanδ can be measured by using, for example, a viscoelasticity measuring device, Iplexer (registered trademark) manufactured by GABO. The peak temperature of tanδ described above is more preferably in the range of -15°C or higher and 0°C or lower.

(1) Compounding material for rubber composition

Such rubber composition can be obtained from the rubber components described below and other compounding materials.

(a) Rubber component

As the rubber component, it is preferred that the diene-based rubber is contained. Examples of specific diene rubbers include isoprene-based rubber(IR), butadiene rubber (BR), styrene butadiene rubber (SBR), acrylonitrile butadiene rubber (NBR), chloroprene rubber (CR), butyl rubber (IIR), and styrene-isoprene-butadiene copolymer rubber (SIBR). These may be used alone or in combination of two or more.

(A) Isoprene-based rubber

When the rubber composition contains isoprene-based rubber, the content (total content) of the isoprene-based rubber in 100% by mass of the rubber component is preferably 10 parts by mass or more, more preferably 20 parts by mass or more as a lower limit, and preferably 60 parts by mass or less, more preferably 40 parts by mass or less as an upper limit. With such a content, the SBR phase and the isoprene-based rubber phase form a co-continuous structure, and the other compounding agents can be held in the phases, so that the above-mentioned occurrence of chipping can be suppressed sufficiently.

Examples of the isoprene-based rubber include natural rubber (NR), isoprene rubber (IR), reformed NR, modified NR, and modified IR.

As the NR, for example, SIR20, RSS # 3, TSR20 and the like, which are common in the tire industry, can be used. The IR is not particularly limited, and for example, IR 2200 and the like, which are common in the tire industry, can be used. Reformed NR includes deproteinized natural rubber (DPNR), high-purity natural rubber (UPNR), and the like. Modified NR includes epoxidized natural rubber (ENR), hydrogenated natural rubber (HNR), grafted natural rubber, and the like. Modified IR includes epoxidized isoprene rubber, hydrogenated isoprene rubber, grafted isoprene rubber, and the like. These may be used alone or in combination of two or more.

(B) SBR

When the rubber composition contains SBR, the content of SBR in 100% by mass of the rubber component is preferably 30 parts by mass or more as a lower limit and preferably 60 parts by mass or less as an upper limit. The weight average molecular weight of SBR is, for example, 100,000 or more as a lower limit, and 2 million or less as an upper limit. In the SBR used in this embodiment, the amount of styrene is 30% by mass or less, and the vinyl bond amount (1,2-bonded butadiene unit amount) in the butadiene portion is 40% by mass or less. The structure identification of SBR (measurement of the amount of styrene and the amount of vinyl) can be performed, for example, by using an

apparatus of the JNM-ECA series manufactured by JEOL Ltd.

The SBR is not particularly limited, and for example, emulsion-polymerized styrene-butadiene rubber (E-SBR), solution-polymerized styrene-butadiene rubber (S-SBR) and the like can be used. The SBR may be either a non-modified SBR or a modified SBR.

The modified SBR may be any SBR having a functional group that interacts with a filler such as silica. Examples thereof include end-modified SBR (end-modified SBR having the above functional group at the terminal) in which at least one end of the SBR is modified with a compound having the above functional group (modifying agent); main chain modified SBR having the functional group in the main chain; main chain terminal modified SBR having the functional group at the main chain and the terminal (for example, a main chain terminal modified SBR having the above functional group to the main chain and having at least one end modified with the above modifying agent; and end-modified SBR which is modified (coupled) with a polyfunctional compound having two or more epoxy groups in the molecule, and into which an epoxy group or hydroxyl group has been introduced,

Examples of the functional group include an amino group, an amide group, a silyl group, an alkoxysilyl group, an isocyanate group, an imino group, an imidazole group, a urea group, an ether group, a carbonyl group, an oxycarbonyl group, a mercapto group, a sulfide group, a disulfide group, a sulfonyl group, a sulfinyl group, a thiocarbonyl group, an ammonium group, an imide group, a hydrazo group, an azo group, a diazo group, a carboxyl group, a nitrile group, a pyridyl group, an alkoxy group, a hydroxyl group, an oxy group, and an epoxy group. In addition, these functional groups may have a substituent.

Further, as the modified SBR, for example, an SBR modified with a compound (modifying agent) represented by the following formula (1) can be used.

[Chemical 1]

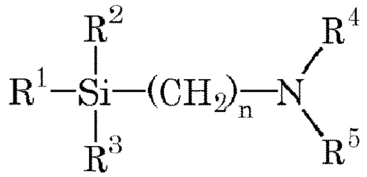

(formula 1)

In the formula, R1, R2 and R3 are the same or different and represent alkyl group, alkoxy group, silyloxy group, acetal group, carboxyl group (-COOH), mercapto group (-SH) or derivatives thereof. R4 and R5 are the same or different and represent hydrogen atoms or alkyl group. R4 and R5 may be combined to form a ring structure with nitrogen atoms. n represents an integer.

As the modified SBR modified by the compound (modifying agent) represented by the above formula, SBR, in which the polymerization end (active end) of the solution-polymerized styrene-butadiene rubber (S-SBR) is modified by the compound represented by the above formula (for example, modified SBR described in JP-A-2010-111753), can be used.

As R1, R2 and R3, an alkoxy group is suitable (preferably an alkoxy group having 1 to 8 carbon atoms, more preferably an alkoxy group having 1 to 4 carbon atoms). As R4 and R5, an alkyl group (preferably an alkyl group having 1 to 3 carbon atoms) is suitable. n is preferably 1 to 5, more preferably 2 to 4, and even more preferably 3. Further, when R4 and R5 are combined to form a ring structure together with a nitrogen atom, a 4-to 8-membered ring is preferable. The alkoxy group also includes a cycloalkoxy group (cyclohexyloxy group, and the like) and an aryloxy group (phenoxy group, benzyloxy group, and the like).

Specific examples of the above modifying agent include 2-dimethylaminoethyltrimethoxysilane, 3-dimethylaminopropyltrimethoxysilane, 2-dimethylaminoethyltriethoxysilane, 3-dimethylaminopropyltriethoxysilane, 2-diethylaminoethyltrimethoxysilane, 3-diethylaminopropyltrimethoxysilane, 2-diethylaminoethyltriethoxysilane, and 3-diethylaminopropyltriethoxysilane. These may be used alone or in combination of two or more.

Further, as the modified SBR, a modified SBR modified with the following compound (modifying agent) can also be used. Examples of the modifying agent include

polyglycidyl ethers of polyhydric alcohols such as ethylene glycol diglycidyl ether, glycerin triglycidyl ether, trimethylolethanetriglycidyl ether, and trimethylolpropane triglycidyl ether;

polyglycidyl ethers of aromatic compounds having two or more phenol groups such as diglycidylated bisphenol A;

polyepoxy compounds such as 1,4-diglycidylbenzene, 1,3,5-triglycidylbenzene, and polyepoxidized liquid polybutadiene;

epoxy group-containing tertiary amines such as 4,4' -diglycidyl-diphenylmethylamine, and 4,4'-diglycidyl-dibenzylmethylamine;
diglycidylamino compounds such as diglycidylaniline, N, N'-diglycidyl-4-glycidyloxyaniline, diglycidyl orthotoluidine, tetraglycidylmethoxylenidiamine, tetraglycidylaminodiphenylmethane, tetraglycidyl-p-phenylenediamine, diglycidylaminomethylcyclohexane, and tetraglycidyl-1,3-bisaminomethylcyclohexane;
amino group-containing acid chlorides such as bis- (1-methylpropyl) carbamate chloride, 4-morpholincarbonyl chloride, 1-pyrrolidincarbonyl chloride, N, N-dimethylcarbamide acid chloride, and N, N-diethylcarbamide acid chloride;
epoxy group-containing silane compounds such as 1,3-bis-(glycidyloxypropyl) -tetramethyldisiloxane, and (3-glycidyloxypropyl) - pentamethyldisiloxane;
sulfide group-containing silane compound such as (trimethylsilyl) [3- (trimethoxysilyl) propyl] sulfide, (trimethylsilyl) [3- (triethoxysilyl) propyl] sulfide, (trimethylsilyl) [3- (tripropoxysilyl) propyl] sulfide, (trimethylsilyl) [3-(tributoxysilyl) propyl] sulfide, (trimethylsilyl) [3- (methyldimethoxysilyl) propyl] sulfide, (trimethylsilyl) [3- (methyldiethoxysilyl) propyl] sulfide, (trimethylsilyl) [3- (methyldipropoxysilyl) propyl] sulfide, and (trimethylsilyl) [3- (methyldibutoxysilyl) propyl] sulfide;
N-substituted aziridine compound such as ethyleneimine and propyleneimine;
alkoxysilanes such as methyltriethoxysilane, N, N-bis (trimethylsilyl) -3-aminopropyltrimethoxysilane, N, N-bis (trimethylsilyl) -3-aminopropyltriethoxysilane, N, N-bis (trimethylsilyl) aminoethyltrimethoxysilane, and N, N-bis (trimethylsilyl) aminoethyltriethoxysilane;
(thio) benzophenone compound having an amino group and/or a substituted amino group such as 4-N, N-dimethylaminobenzophenone, 4-N, N-di-t-butylaminobenzophenone, 4-N, N-diphenylamino benzophenone, 4,4'-bis (dimethylamino) benzophenone, 4,4'-bis (diethylamino) benzophenone, 4,4'-bis (diphenylamino) benzophenone, and N, N, N', N'-bis-(tetraethylamino) benzophenone;
benzaldehyde compounds having an amino group and/or a substituted amino group such as 4-N, N-dimethylaminobenzaldehyde, 4-N, N-diphenylaminobenzaldehyde, and 4-N, N-divinylamino benzaldehyde;
N-substituted pyroridone such as N-methyl-2-pyrrolidone, N-vinyl-2-pyrrolidone, N-phenyl-2-pyrrolidone, N-t-butyl-2-pyrrolidone, and N-methyl-5-methyl-2-pyrrolidone;
N- substituted piperidone such as methyl-2-piperidone, N-vinyl-2-piperidone, and N-phenyl-2-piperidone;
N-substituted lactams such as N-methyl -ε-caprolactam, N-phenyl-ε-caprolactum, N-methyl-ω-laurilolactum, N-vinyl-ω-laurilolactum, N-methyl-β-propiolactam, and N-phenyl-β-propiolactam; and
N, N-bis- (2,3-epoxypropoxy)-aniline, 4,4-methylene-bis- (N, N-glycidylaniline), tris- (2,3-epoxypropyl)-1,3,5-triazine-2,4,6-triones, N, N-diethylacetamide, N-methylmaleimide, N, N-diethylurea, 1,3-dimethylethylene urea, 1,3-divinylethyleneurea, 1,3-diethyl-2-imidazolidinone, 1-methyl-3-ethyl-2-imidazolidinone, 4-N, N-dimethylaminoacetophenone, 4-N, N-diethylaminoacetophenone, 1,3-bis (diphenylamino)-2-propanone, and 1,7 -bis(methylethylamino)-4-heptanone. The modification with the above compound (modifying agent) can be carried out by a known method.

As the SBR, for example, SBR manufactured and sold by Sumitomo Chemical Co., Ltd., JSR Corporation, Asahi Kasei Co., Ltd., Nippon Zeon Co., Ltd., Versalis Co., Ltd., etc. can be used. The SBR may be used alone or in combination of two or more.

(C) BR

The rubber composition may contain butadiene rubber (BR), if necessary. When the rubber composition contains BR, the content of BR in 100parts by mass of the rubber component is, for example, 10parts by mass or more and 30parts by mass or less. The weight average molecular weight of BR is, for example, 100,000 or more and 2 million or less. The amount of vinyl in BR is, for example, 1% by mass or more and 30% by mass or less. The cis amount of BR is, for example, 1% by mass or more and 98% by mass or less. The trans amount of BR is, for example, 1% by mass or more and 60% by mass or less.
The BR is not particularly limited, and BR having a high cis content (cis content of 90% or more), BR having a low cis content, BR containing syndiotactic polybutadiene crystals, and the like can be used. The BR may be either a non-modified BR or a modified BR, and examples of the modified BR include a modified BR into which the above-mentioned functional group has been introduced. These may be used alone or in combination of two or more. The cis content can be measured by infrared absorption spectrum analysis.
As the BR, for example, products of Ube Kosan Co., Ltd., JSR Corporation, Asahi Kasei Co., Ltd., and Nippon Zeon Co., Ltd., etc. can be used.

(b) Compounding materials other than rubber components

(A) Silica

The rubber composition preferably contains.
Specifically, silica having a nitrogen adsorption specific surface area ($N_2SA$) of 150$m^2$/g or more and 250$m^2$/g or less is preferable, and silica having $N_2SA$ of 190$m^2$/g or more and 220$m^2$/g or less is more preferred. The $N_2SA$ of silica is a value measured by the BET method according to ASTM D3037-93.

The lower limit of the content of the rubber component with respect to 100 parts by mass is preferably 40 parts by mass or more, more preferably 50 parts by mass or more, and further preferably 55 parts by mass or more. The upper limit is preferably 200 parts by mass or less, more preferably 150 parts by mass or less, further preferably 120 parts by mass or less, and particularly preferably 100 parts by mass or less.

The content of silica is preferably 40 parts by mass or more and 200 parts by mass or less with respect to 100 parts by mass of the rubber component, and the content of silica is preferably larger than the amount of styrene and vinyl bonds in the SBR. Since silica can be evenly dispersed throughout the matrix by the above content of silica, the hardness can be made uniform even at low temperatures, the followability of the tire to the road surface can be improved, and the occurrence of chipping can be suppressed.

Specific examples of silica include dry silica (anhydrous silica) and wet silica (hydrous silica). Of these, wet silica is preferable because it has a lot of silanol groups. For example, products of Degussa, Rhodia, Tosoh Silica Co., Ltd., Solvay Japan Co., Ltd., and Tokuyama Co., Ltd., etc. can be used.

(B) Silane coupling agent

The rubber composition preferably contains a silane coupling agent together with silica. The silane coupling agent is not particularly limited. Examples of the silane coupling agent include sulfide-based ones such as bis(3-triethoxysilylpropyl)tetrasulfide, bis (2-triethoxysilylethyl)tetrasulfide, bis (4-triethoxysilylbutyl)tetrasulfide, bis(3-trimethoxysilylpropyl) tetrasulfide, bis(2-trimethoxysilylethyl) tetrasulfide, bis(2-triethoxysilylethyl)trisulfide, bis(4-trimethoxysilylbutyl) trisulfide, bis(3-triethoxysilylpropyl)disulfide, bis(2-triethoxysilylethyl) disulfide, bis(4-triethoxysilylbutyl)disulfide, bis(3-trimethoxysilylpropyl) disulfide, bis(2-trimethoxysilylethyl)disulfide, bis(4-trimethoxysilylbutyl)disulfide, 3-trimethoxysilylpropyl-N, N-dimethylthiocarbamoyltetrasulfide, 2-triethoxysilylethyl-N, N-dimethylthiocarbamoyltetrasulfide, and 3-triethoxysilylpropylmethacrylatemonosulfide; mercapto-based ones such as 3-mercaptopropyltrimethoxysilane, 2-mercaptoethyltriethoxysilane, and NXT and NXT-Z manufactured by Momentive; vinyl-based ones such as vinyl triethoxysilane, and vinyl trimethoxysilane; amino-based ones such as 3-aminopropyltriethoxysilane and 3-aminopropyltrimethoxysilane; glycidoxy-based ones such as yglycidoxypropyltriethoxysilane and Y-glycidoxypropyltrimethoxysilane; nitro-based ones such as 3-nitropropyltrimethoxysilane, and 3-nitropropyltriethoxysilane; and chloro-based ones such as 3-chloropropyltrimethoxysilane, and 3-chloropropyltriethoxysilane. These may be used alone or in combination of two or more.

The preferable content of the silane coupling agent is, for example, 3.0 parts by mass or more and 20.0 parts by mass or less with respect to 100 parts by mass of silica. More preferably, it is 4.5 parts by mass or more and 10 parts by mass or less, and further preferably, it is 8 parts by mass or less. As the silane coupling agent, for example, products of Degussa, Momentive, Shinetsu Silicone Co., Ltd., Tokyo Chemical Industry Co., Ltd., Azumax Co., Ltd., Toray Dow Corning Co., Ltd., etc. can be used.

Among them, a highly reactive mercapto-based silane coupling agent is particularly preferable because it can improve the dispersion of silica, reinforce both the SBR phase and the NR phase, and suppress the occurrence of chipping.

(C) Carbon black

The rubber composition preferably contains carbon black. The content of carbon black is, for example, 1 part by mass or more and 200 parts by mass or less with respect to 100 parts by mass of the rubber component.

The carbon black is not particularly limited, and examples thereof includes furnace black (furnace carbon black) such as SAF, ISAF, HAF, MAF, FEF, SRF, GPF, APF, FF, CF, SCF and ECF; acetylene black (acetylene carbon black); thermal black (thermal carbon black) such as FT and MT; channel black (channel carbon black) such as EPC, MPC and CC; and graphite. These may be used alone or in combination of two or more.

The nitrogen adsorption specific surface area ($N_2SA$) of carbon black is, for example, 30$m^2$/g or more and 250$m^2$/g or less. The adsorption amount of dibutyl phthalate (DBP) of carbon black is, for example, 50ml/100 g or more and 250ml/100 g or less. The nitrogen adsorption specific surface area of carbon black is measured according to ASTM D4820-93, and the adsorption amount of DBP is measured according to ASTM D2414-93.

The specific carbon black is not particularly limited, and examples thereof include N134, N110, N220, N234,

N219, N339, N330, N326, N351, N550, and N762. Commercially available products include, for example, products of Asahi Carbon Co., Ltd., Cabot Japan Co., Ltd., Tokai Carbon Co., Ltd., Mitsubishi Chemical Corporation, Lion Corporation, Shin Nikka Carbon Co., Ltd., Columbia Carbon Co., Ltd., etc. These may be used alone or in combination of two or more.

(D) Resin component

The rubber composition preferably contains a resin component, whereby the Tg can be designed to be high. The lower limit of the content with respect to 100 parts by mass of the rubber component is preferably 5 parts by mass or more, and more preferably more than 25 parts by mass. The upper limit is preferably less than 40 parts by mass, more preferably less than 30 parts by mass. In such a range, by containing the resin component in an amount smaller than the styrene-vinyl bond amount, it is possible to prevent the formation of minute domains of the resin due to the interaction with SBR in the matrix.

The softening point of the resin component is preferably 60°C or higher, more preferably 65°C or higher, from the viewpoint of wet grip performance. Further, from the viewpoint of wet grip performance at low temperature, 150°C or lower is preferable, 140°C or lower is more preferred, and 130°C or lower is further preferable. The softening point of the resin component is measured by a ring and ball softening point measuring device in accordance with JIS K 6220-1: 2001, and is defined as the temperature at which the ball has dropped.

The resin component is not particularly limited, and examples thereof include petroleum resins, terpene-based resins, rosin-based resins, and phenol-based resins commonly used in the tire industry. One of these resin components may be used alone, or two or more thereof may be used in combination. Among these, it is preferable to use a terpene-based resin, and it may be used in combination with other resins.

The terpene-based resin has good compatibility with isoprene-based rubber, and it is difficult to form a minute domain in the system. Therefore, stress concentration is easily relieved and wear resistance at low temperature can be improved. In addition, since the inside of the system is made uniform by the good compatibility of the terpene-based resin with the isoprene-based rubber, the peak temperature of tan $\delta$ can be raised and the heat generation when input at a high frequency can be improved.

Examples of the terpene resins include polyterpenes, terpene phenols, and aromatic-modified terpene resins. Polyterpene is a resin obtained by polymerizing a terpene compound and a hydrogenated product thereof. The terpene compound is a hydrocarbon having a composition of $(C_5H_8)_n$ or an oxygen-containing derivative thereof.), which is a compound having a terpene classified as monoterpenes ($C_{10}H_{16}$), sesquiterpenes ($C_{15}H_{24}$), diterpenes ($C_{20}H_{32}$), etc. as the basic skeleton. Examples thereof include $\alpha$-pinene, $\beta$-pinene, dipentene, limonene, myrcene, alloocimene, osimene, $\alpha$-ferandrene, $\alpha$-terpinene, $\gamma$-terpinene, terpinene, 1,8-cineol, 1,4-cineol, $\alpha$-terpineol, $\beta$-terpineol, and $\gamma$-terpineol.

Examples of the polyterpene include terpene resins such as $\alpha$-pinene resin, $\beta$-pinene resin, limonene resin, dipentene resin, and $\beta$-pinene/limonene resin, which are made from the above-mentioned terpene compound, as well as hydrogenated terpene resin obtained by hydrogenating the terpene resin. Examples of the terpene phenol include a resin obtained by copolymerizing the above-mentioned terpene compound and the phenol compound, and a resin obtained by hydrogenating above-mentioned resin. Specifically, a resin obtained by condensing the above-mentioned terpene compound, the phenol compound and the formalin is mentioned. Examples of the phenol compound include phenol, bisphenol A, cresol, and xylenol. Examples of the aromatic-modified terpene resin include a resin obtained by modifying a terpene resin with an aromatic compound, and a resin obtained by hydrogenating above-mentioned resin. The aromatic compound is not particularly limited as long as it is a compound having an aromatic ring, and examples thereof include phenol compounds such as phenol, alkylphenol, alkoxyphenol, and unsaturated hydrocarbon group-containing phenol; naphthol compounds such as naphthol, alkylnaphthol, alkoxynaphthol, and unsaturated hydrocarbon group-containing naphthols; styrene derivatives such as styrene, alkylstyrene, alkoxystyrene, unsaturated hydrocarbon group-containing styrene; coumarone, and indene.

As the commercially available terpene resin, for example, a product of Yasuhara Chemical Co., Ltd. can be used, and it may be used alone or in combination of two or more.

Examples of petroleum resins include C5-based petroleum resins, aromatic petroleum resins, and C5C9-based petroleum resins.

The "C5-based petroleum resin" refers to a resin obtained by polymerizing a C5 fraction. Examples of the C5 fraction include petroleum fractions having 4 to 5 carbon atoms such as cyclopentadiene, pentene, pentadiene, and isoprene. As the C5-based petroleum resin, a dicyclopentadiene resin (DCPD resin) is preferably used.

The "aromatic petroleum resin" refers to a resin obtained by polymerizing a C9 fraction, and may be hydrogenated or modified. Examples of the C9 fraction include petroleum fractions having 8 to 10 carbon atoms such as vinyltoluene, alkylstyrene, indene, and methyl indene. As specific examples of the aromatic petroleum resin, for example, a coumarone inden resin, a coumarone resin, an inden resin, and an aromatic vinyl resin are preferably used. As the aromatic vinyl resin, a homopolymer of $\alpha$-methylstyrene or styrene or a copolymer of $\alpha$-methylstyrene and styrene is preferable because it is economical, easy to process, and excellent in heat generation. A copolymer of $\alpha$-methylstyrene and styrene is more

preferred. As the aromatic vinyl-based resin, for example, those commercially available from Clayton, Eastman Chemical, etc. can be used.

The "C5C9-based petroleum resin" refers to a resin obtained by copolymerizing the C5 fraction and the C9 fraction, and may be hydrogenated or modified. Examples of the C5 fraction and the C9 fraction include the above-mentioned petroleum fraction. As the C5C9-based petroleum resin, for example, those commercially available from Tosoh Corporation, LUHUA, etc. can be used.

The rosin-based resin is not particularly limited, and examples thereof include natural resin rosin, and rosin-modified resin obtained by modifying natural resin rosin by hydrogenation, disproportionation, dimerization, esterification, or the like.

The phenol-based resin is not particularly limited, and examples thereof include phenol formaldehyde resin, alkylphenol formaldehyde resin, alkylphenol acetylene resin, and oil-modified phenol formaldehyde resin.

(E) Oil

The rubber composition may contain oil. The content of oil is, for example, preferably 3 parts by mass or more, more preferably 5 parts by mass or more, and further preferably 10 parts by mass or more, as the lower limit, with respect to 100 parts by mass of the rubber component. The upper limit is preferably 50 parts by mass or less, more preferably 40 parts by mass or less, and further preferably 30 parts by mass or less. The content of the oil also includes the amount of oil contained in rubber (oil spread rubber).

Examples of the oil include process oils, vegetable oils and fats, and mixtures thereof. As the process oil, for example, a paraffinic process oil, an aroma-based process oil, a naphthene process oil, or the like can be used. Examples of the vegetable oils and fats include castor oil, cottonseed oil, sesame oil, rapeseed oil, soybean oil, palm oil, coconut oil, peanut oil, rosin, pine oil, pine tar, tall oil, corn oil, rice oil, beni flower oil, sesame oil, olive oil, sunflower oil, palm kernel oil, camellia oil, jojoba oil, macadamia nut oil, and tung oil. These may be used alone or in combination of two or more.

Examples of oils, which can be used, include products of Idemitsu Kosan Co., Ltd., Sankyo Yuka Kogyo Co., Ltd., Japan Energy Co., Ltd., Orisoi Co., Ltd., H & R Co., Ltd., Toyokuni Seiyu Co., Ltd., Showa Shell Sekiyu Co., Ltd., and Fuji Kosan Co., Ltd.

(F) Wax

The rubber composition preferably contains wax. Content of the wax is, for example, 0.5 part by mass or more and 20 parts by mass or less with respect to 100 parts by mass of the rubber component.

The wax is not particularly limited, and examples thereof include petroleum waxes such as paraffin wax and microcrystalline wax; natural waxes such as plant wax and animal wax; and synthetic waxes such as a polymer of ethylene, propylene and the like. These may be used alone or in combination of two or more.

As the wax, for example, products of Ouchi Shinko Kagaku Kogyo Co., Ltd., Nippon Seiro Co., Ltd., and Seiko Kagaku Co., Ltd. can be used.

(G) Anti-aging agent

The rubber composition preferably contains an anti-aging agent. Content of the anti-aging agent is, for example, 1 part by mass or more and 10 parts by mass or less with respect to 100 parts by mass of the rubber component.

Examples of the antiaging agent include naphthylamine-based antiaging agents such as phenyl-$\alpha$-naphthylamine; diphenylamine-based antiaging agents such as octylated diphenylamine and 4,4'-bis ($\alpha$, $\alpha$'-dimethylbenzyl) diphenylamine; p-phenylenediamine-based anti-aging agent such as N-isopropyl-N'-phenyl-p-phenylenediamine, N-(1,3-dimethylbutyl)-N'-phenyl-p-phenylenediamine, and N,N'-di-2-naphthyl-p-phenylenediamine; quinoline-based anti-aging agent such as a polymer of 2,2,4-trimethyl-1,2-dihydroquinolin; monophenolic anti-aging agents such as 2,6-di-t-butyl-4-methylphenol, styrenated phenol; and bis, tris, polyphenolic anti-aging agents such as tetrakis-[methylene-3- (3',5'-di-t-butyl-4'-hydroxyphenyl)propionate] methane. These may be used alone or in combination of two or more.

As the anti-aging agent, for example, products of Seiko Chemical Co., Ltd., Sumitomo Chemical Co., Ltd., Ouchi Shinko Chemical Industry Co., Ltd., Flexis Co., Ltd., etc. can be used.

(H) Stearic acid

The rubber composition may contain stearic acid. Content of stearic acid is, for example, 0.5 parts by mass or more and 10.0 parts by mass or less with respect to 100 parts by mass of the rubber component. As the stearic acid, conventionally known ones can be used, and, for example, products of NOF Corporation, NOF Corporation, Kao Corporation, Fuji film Wako Pure Chemical Industries, Ltd., and Chiba Fatty Acid Co., Ltd., etc. can be used.

(I) Zinc oxide

The rubber composition may contain zinc oxide. Content of zinc oxide is, for example, 0.5 part by mass or more and 10 parts by mass or less with respect to 100 parts by mass of the rubber component. As the zinc oxide, conventionally known ones can be used. For example, products of Mitsui Metal Mining Co., Ltd., Toho Zinc Co., Ltd., Hakusui Tech Co., Ltd., Shodo Chemical Industry Co., Ltd., Sakai Chemical Industry Co., Ltd., etc. can be used.

(J) Crosslinking agent and vulcanization accelerator

The rubber composition preferably contains a cross-linking agent such as sulfur. Content of the cross-linking agent is, for example, 0.1 part by mass or more and 10.0 parts by mass or less with respect to 100 parts by mass of the rubber component.

Examples of sulfur include powdered sulfur, precipitated sulfur, colloidal sulfur, insoluble sulfur, highly dispersible sulfur, and soluble sulfur, which are commonly used in the rubber industry. These may be used alone or in combination of two or more.

As the sulfur, for example, products of Tsurumi Chemical Industry Co., Ltd., Karuizawa Sulfur Co., Ltd., Shikoku Chemicals Corporation, Flexis Co., Ltd., Nippon Kanryo Kogyo Co., Ltd., Hosoi Chemical Industry Co., Ltd., etc. can be used.

Examples of the cross-linking agent other than sulfur include vulcanizing agents containing a sulfur atom such as Tackilol V200 manufactured by Taoka Chemical Industry Co., Ltd., DURALINK HTS (1,6-hexamethylene-sodium dithiosulfate dihydrate) manufactured by Flexis, and KA9188 (1,6-bis (N, N'-dibenzylthiocarbamoyldithio) hexane) manufactured by Rankses; and organic peroxides such as dicumyl peroxide.

The rubber composition preferably contains a vulcanization accelerator. Content of the vulcanization accelerator is, for example, 0.3 part by mass or more and 10.0 parts by mass or less with respect to 100 parts by mass of the rubber component.

Examples of the vulcanization accelerator include thiazole-based vulcanization accelerators such as 2-mercaptobenzothiazole, di-2-benzothiazolyl disulfide, and N-cyclohexyl-2-benzothiadylsulfenamide; thiuram-based vulcanization accelerators such as tetramethylthiuram disulfide (TMTD), tetrabenzyltiuram disulfide (TBzTD), and tetrakis (2-ethylhexyl) thiuram disulfide (TOT-N); sulfenamide-based vulcanization accelerators such as N-cyclohexyl-2-benzothiazolesulfenamide, N-t-butyl- 2-benzothiazolyl sulfenamide, N-oxyethylene-2-benzothiazolesulfenamide, N-oxyethylene-2-benzothiazolesulfenamide, and N,N'-diisopropyl-2-benzothiazolesulfenamide; and guanidine-based vulcanization accelerators such as diphenylguanidine, diorthotrilguanidine, and orthotrilviguanidine. These may be used alone or in combination of two or more.

(K) Other

In addition to the above components, the rubber composition may further contain additives generally used in the tire industry, for example, fillers such as organic peroxides, calcium carbonate, talc, alumina, clay, aluminum hydroxide, and mica. Content of these additives is, for example, 0.1 part by mass or more and 200 parts by mass or less with respect to 100 parts by mass of the rubber component.

(2) Production of tread rubber composition

The rubber composition is produced by a general method, for example, a manufacturing method including a base kneading step of kneading a rubber component with a filler such as silica or carbon black, and a finish kneading step of kneading the kneaded product obtained in the base kneading step and a cross-linking agent.

The kneading can be performed using a known (sealed) kneader such as a banbury mixer, a kneader, or an open roll.

The kneading temperature of the base kneading step is, for example, 50 °C or higher and 200 °C or lower, and the kneading time is, for example, 30 seconds or longer and 30 minutes or shorter. In the base kneading process, in addition to the above components, compounding agents conventionally used in the rubber industry, such as softeners such as oil, stearic acid, zinc oxide, antiaging agents, waxes, and vulcanization accelerators, may be appropriately added and kneaded as needed.

In the finish kneading step, the kneaded product obtained in the base kneading step and the cross-linking agent are kneaded. The kneading temperature of the finish kneading step is, for example, room temperature or above and 80 °C or lower, and the kneading time is, for example, 1 minute or longer and 15 minutes or shorter. In the finish kneading

step, in addition to the above components, a vulcanization accelerator, zinc oxide and the like may be appropriately added and kneaded as needed.

3. Tire manufacturing

The tire of the present invention is manufactured by a usual method using an unvulcanized rubber composition obtained through the finish kneading step. That is, the unvulcanized rubber composition is extruded according to the shape of each tire member of the tread, and is molded together with other tire members by a normal method on a tire molding machine to produce an unvulcanized tire.
Specifically, on the molded drum, the inner liner as a member to ensure the airtightness of the tire, the carcass as a member to withstand the load, impact, and filling air pressure received by the tire, a belt as a member to strongly tighten the carcass to increase the rigidity of the tread, and the like are wound, both ends of the carcass are fixed to both side edges, a bead part as a member for fixing the tire to the rim is arranged, and formed into a toroid shape. Then the tread is pasted on the center of the outer circumference, and the sidewall portion as a member that protects the carcass and withstands bending is pasted on the radial outer side to produce an unvulcanized tire.
Then, the produced unvulcanized tire is heated and pressed in a vulcanizer to obtain a tire. The vulcanization step can be carried out by applying a known vulcanization means. The vulcanization temperature is, for example, 120°C or higher and 200°C or lower, and the vulcanization time is, for example, 5 minutes or longer and 15 minutes or shorter.
In the present embodiment, it is preferable that the cross-sectional width of the tire is Wt (mm) and the outer diameter Dt (mm) satisfy $1963.4 \leq (D_t^2 \times \pi/4)/Wt \leq 2827.4$, when the tire is installed on a standardized rim and the internal pressure is the standardized internal pressure. That is, it is preferable that the tire has a larger area from the lateral direction of the tire, $[(Dt/2)^2 \times \pi) = (Dt^2 \times \pi/4)]$, with respect to the cross-sectional width Wt of the tire than before. By satisfying the above formula, the moment of inertia when the tire rolls can be secured sufficiently. In addition, by making the outer diameter larger than before, it is possible to extend the time of not contacting the ground during braking, so heat generation and air cooling during the time of grounding are efficiently repeated, and good heat generation is obtained at the tread portion during braking. As a result, the wet grip performance can be further improved in a low temperature environment.
The tire outer diameter Dt in the above formula is the outer diameter of the tire in a state where the tire is assembled to the standardized rim, the internal pressure is set to the standardized internal pressure (for example, 250 kPa for a passenger car tire), and no load is applied. The cross-sectional width Wt of the tire is the width obtained by excluding the pattern, characters, etc. on the side surface of the tire from the linear distance between the sidewalls including all the patterns and characters, etc. on the side surface of the tire, that is, the total width of the tire, in a state where the tire is assembled to the standardized rim, the internal pressure is set to the standardized internal pressure, and no load is applied.
Specific tires that can satisfy the above formula include 145/60R18, 145/60R19, 155/55R18, 155/55R19, 155/70R17, 155/70R19, 165/55R20, 165/55R21, 165/60R19, 165/65R19, 165/70R18, 175/55R19, 175/55R20, 175/55R22, 175/60R18, 185/55R19, 185/60R20, 195/50R20, and 195/55R20.
The tire satisfying the above formula is preferably applied to a pneumatic tire for a passenger car, and by satisfying the above formula, it is possible to contribute to the solution of the problem in the present invention, more preferably.
The pneumatic tire for a passenger car referred to here is a tire mounted on a vehicle traveling on four wheels and has a maximum load capacity of 1000 kg or less.
The maximum load capacity is not particularly limited as long as it is 1000 kg or less. However, in general, the tire weight tends to increase as the maximum load capacity increases, and the braking distance also increases due to inertia accordingly. Therefore, the maximum load capacity is preferably 900 kg or less, more preferably 800 kg or less, and further preferably 700 kg or less.
From the viewpoint of the braking distance due to the inertia described above, the tire weight is preferably 20 kg or less, more preferably 15 kg or less, and further preferably 12 kg or less, 10 kg or less, and 8 kg or less. The tire of the present invention may be provided with electronic components, and in this case, the tire weight referred to here is the weight of the tire including the weights of the electronic components and the electronic component mounting members. If a sealant, sponge or the like is provided in the lumen, the weight of the tire includes them.

[EXAMPLES]

Hereinafter, the present invention will be described in more detail with reference to Examples.

1. Manufacture of rubber compositions for treads

First, a rubber composition was produced.

(1) Compounding material

First, each compounding material shown below was prepared.

(a) Rubber component

(A) NR: TSR20
(B) SBR1: European SOL RC3737 manufactured by Versalis (Styrene amount: 37% by mass, vinyl bond amount: 37% by mass)
(C) SBR2: Europrene SOL RC2525 manufactured by Versalis (Styrene amount: 25% by mass, vinyl bond amount: 25% by mass)
(D) SBR3: Modified SBR produced according to the method described in the next paragraph. (Styrene amount: 28% by mass, vinyl bond amount: 56% by mass)
(E) BR: BR150 manufactured by Ube Kosan Co., Ltd.

The SBR3 was produced according to the procedure shown below. First, cyclohexane, tetrahydrofuran, styrene, and 1,3-butadiene were charged into a nitrogen-substituted autoclave reactor. After adjusting the temperature of the contents of the reactor to 20 °C, n-butyllithium was added to initiate polymerization. Polymerization was carried out under adiabatic conditions, and the maximum temperature reached 85 °C. When the polymerization conversion reaches 99%, 1,3- butadiene was added, and then further polymerization was carried out for 5 minutes. Thereafter, N, N-bis (trimethylsilyl) -3-aminopropyltriethoxysilane was added as a modifying agent to carry out the reaction. After completion of the polymerization reaction, 2,6-di-tert-butyl-p-cresol was added. Then, the solvent was removed by steam stripping and dried by a heat roll adjusted to 110 °C to obtain SBR3.

(b) Compounding materials other than rubber components

(A) Silica: Ultrasil VN3 manufactured by Evonik Industries, Inc. ($N_2SA$: 175$m^2$/g)
(B) Silane coupling agent 1: Si266 manufactured by Evonik Industries, Inc. (Bis (3-triethoxysilylpropyl) disulfide)
(C) Silane coupling agent 2: NXT-Z45 manufactured by Momentive. (Mercapto-based silane coupling agent)
(D) Carbon black: Diamond black N220 manufactured by Mitsubishi Chemical Corporation
(E) Oil: Diana Process AH-24 (aroma type) manufactured by Idemitsu Kosan Co., Ltd.
(F) Resin 1: SYLVARES SA 85 manufactured by Clayton (Aromatic vinyl type resin)
(G) Resin 2: TO125 manufactured by Yasuhara Chemical Co., Ltd. (Aromatically modified terpene resin)
(H) Wax: Sunknock wax manufactured by Ouchi Shinko Kagaku Co., Ltd.
(I) Anti-aging agent: Nocrack 6C manufactured by Ouchi Shinko Kagaku Co., Ltd.
(J) Stearic acid: Beaded stearic acid "Tsubaki" manufactured by NOF CORPORATION
(K) Zinc oxide: Zinc white No. 1 manufactured by Mitsui Mining & Smelting Co., Ltd.
(L) Crosslinking agent and vulcanization accelerator

Sulfur: Powdered sulfur manufactured by Tsurumi Chemical Industry Co., Ltd.
Vulcanization accelerator: Noxeller NS manufactured by Ouchi Shinko Kagaku Co., Ltd.

(2) Production of rubber composition

In accordance with the formulation shown in Table 1, materials other than sulfur and the vulcanization accelerator were kneaded under the conditions of 150°C for 5 minutes using a banbury mixer to obtain a kneaded product. Each compounding amount is a mass part.

[Table 1]

| | Formulation No. | | | | | | | | | | | |
|---|---|---|---|---|---|---|---|---|---|---|---|---|
| | 1 | 2 | 3 | 4 | 5 | 6 | 7 | 8 | 9 | 10 | 11 | 12 |
| [Rubber component] | | | | | | | | | | | | |
| NR | 10 | 10 | 10 | 10 | 20 | 40 | 40 | 40 | 40 | 40 | 40 | 60 |
| SBR1 | 60 | | 60 | | | | | | | | | |
| SBR2 | | | | 60 | 50 | 50 | 50 | 50 | 50 | 60 | 60 | 30 |
| SBR3 | | 60 | | | | | | | | | | |
| BR | 30 | 30 | 30 | 30 | 30 | 10 | 10 | 10 | 10 | | | 10 |
| [Other Compounding Materials] | | | | | | | | | | | | |
| Silica | 60 | 60 | 60 | 60 | 60 | 60 | 85 | 85 | 85 | 60 | 60 | 60 |
| Coupling agent 1 | 4.8 | 4.8 | 4.8 | 4.8 | 4.8 | 4.8 | 6.8 | 6.8 | | 4.8 | 4.8 | 4.8 |
| Coupling agent 2 | | | | | | | | | 6.8 | | | |
| Carbon | 10 | 10 | 10 | 10 | 10 | 10 | 10 | 10 | 10 | 10 | 10 | 10 |
| Oil | 25 | 25 | 5 | 5 | 5 | 5 | 5 | 5 | 5 | 5 | 5 | 5 |
| Resin 1 | 5 | 5 | 25 | 25 | 5 | 25 | 25 | | | 25 | | 5 |
| Resin 2 | | | | | | | | 25 | 25 | | 25 | |
| Wax | 2 | 2 | 2 | 2 | 2 | 2 | 2 | 2 | 2 | 2 | 2 | 2 |
| Anti-aging agent | 2 | 2 | 2 | 2 | 2 | 2 | 2 | 2 | 2 | 2 | 2 | 2 |
| Stearic acid | 2 | 2 | 2 | 2 | 2 | 2 | 2 | 2 | 2 | 2 | 2 | 2 |
| Zinc oxide | 3 | 3 | 3 | 3 | 3 | 3 | 3 | 3 | 3 | 3 | 3 | 3 |
| [Crosslinking agent and vulcanization accelerator] | | | | | | | | | | | | |
| Sulfur | 1.5 | 1.5 | 1.5 | 1.5 | 1.5 | 1.5 | 1.5 | 1.5 | 1.5 | 1.5 | 1.5 | 1.5 |
| Vulcanization accelerator | 3 | 3 | 3 | 3 | 3 | 3 | 3 | 3 | 3 | 3 | 3 | 3 |
| Peak temperature of tan δ (°C) | | | | | | | | | | | | |
| | -25 | -27 | -17 | -20 | -20 | -15 | -13 | -13 | -13 | -13 | -13 | -13 |

2. Tire manufacturing

Next, sulfur and a vulcanization accelerator were added to the obtained rubber composition for tread and kneaded under the conditions of 80°C for 5 minutes using an open roll to obtain an unvulcanized rubber composition. The obtained unvulcanized rubber composition was formed into a tread having the lateral groove pattern shown in Tables 2 and 3, and then bonded together with other tire members to form an unvulcanized tire. The formed unvulcanized tire was pressed at 170°C for 10 minutes and vulcanized to produce a test tire (size: 175/80R16).

In Tables 2 and 3, the lateral groove pattern 1 refers to the pattern of lateral groove pattern shown in FIG. 3, the lateral groove pattern 2 refers to the pattern of lateral groove pattern shown in FIG. 1, and the lateral groove pattern 3 refers to the pattern of lateral groove pattern shown in FIG. 2. In the lateral groove patterns 2 and 3, the lateral grooves were formed so that the B/A is 3.0 in pattern 2 and is 6.0 in pattern 3, when the width on the end side is A (mm) and the width on the center side is B (mm).

3. Evaluation test

(1) Measurement of loss tangent (tanδ)

A viscoelasticity measurement sample with a size of 20 mm in length × 4 mm in width × 1 mm in thickness

was collected from the rubber layer of the tread part of each test tire so that the tire circumference direction was the long side. Using the Iplexer series manufactured by GABO, tan δ was measured by changing the temperature from -50°C to 5°C under the conditions of frequency of 10 Hz, initial strain of 2%, amplitude ± 1%, and heating rate of 2°C/min, and a temperature distribution curve was created. Then, the temperature corresponding to the largest tanδ value (tan δ peak temperature) in the obtained temperature distribution curve was defined as the glass transition temperature (Tg). The results are also shown in Table 1.

(2) Low temperature wet grip performance evaluation test

Install each test tire on all wheels of the vehicle (domestic FF vehicle, displacement 2000cc), drive on a test course on a wet asphalt road surface (temperature less than 20 °C) for 8000km at a speed of 80km/h, and then apply the brakes. The braking distance was measured. The evaluation was performed by indexing the braking distance of the test tire of Comparative Example 1 measured when the test tire was new as 100 by the following formula. The larger the value, the better the wet grip performance at low temperature. The results are also shown in Tables 2 and 3.

$$\text{Wet grip performance} = [(\text{Braking distance of Comparative Example 1} / \text{Braking distance of test tire})] \times 100$$

(3) Evaluation of wear performance

At the same time, the wear performance was evaluated.

Specifically, for each test tire after driving 8000 km in the above low temperature wet grip performance evaluation test, the depth of the circumferential main groove near the equator of the tire was measured, and the rate of change (decrease rate) with respect to the depth of the groove measured before the test was calculated. The evaluation was performed by indexing by the following formula based on the rate of change in Comparative Example 8 and the rate of change in each test tire. The larger the value, the less the groove wears and the better the wear performance. The results are also shown in Tables 2 and 3.

$$\text{Wear performance} = [(\text{Ratio of change in groove depth in Com Example 8} / \text{Rate of change in groove depth of test tire})] \times 100$$

[Table 2]

| Example No. | 1 | 2 | 3 | 4 | 5 | 6 | 7 | 8 | 9 | 10 |
|---|---|---|---|---|---|---|---|---|---|---|
| Rubber Formulation No. | No. 4 | No. 6 | No. 10 | No. 11 | No. 7 | No. 9 | No. 4 | No. 10 | No. 5 | No. 12 |
| tan δ peak (°C) | -20 | -15 | -13 | -13 | -13 | -13 | -20 | -13 | -15 | -10 |
| Lateral groove pattern | 2 | 2 | 2 | 2 | 2 | 2 | 3 | 3 | 2 | 2 |
| (Evaluation Results) | | | | | | | | | | |
| Wet grip performance | 100 | 110 | 115 | 120 | 120 | 125 | 100 | 115 | 115 | 130 |
| Wear performance | 120 | 100 | 95 | 95 | 110 | 115 | 120 | 95 | 105 | 110 |

[Table 3]

| Comparative Example No. | 1 | 2 | 3 | 4 | 5 | 6 | 7 | 8 | 9 | 10 |
|---|---|---|---|---|---|---|---|---|---|---|
| Rubber Formulation No. | No.1 | No.1 | No.2 | No.3 | No.4 | No.3 | No.6 | No.7 | No.8 | No.9 |

(continued)

| Comparative Example No. | 1 | 2 | 3 | 4 | 5 | 6 | 7 | 8 | 9 | 10 |
|---|---|---|---|---|---|---|---|---|---|---|
| tan δ peak (°C) | -25 | -25 | -27 | -17 | -20 | -17 | -15 | -13 | -13 | -13 |
| Lateral groove pattern | 1 | 2 | 2 | 1 | 1 | 2 | 1 | 1 | 1 | 1 |
| (Evaluation Results) | | | | | | | | | | |
| Wet grip performance | 82 | 85 | 85 | 86 | 82 | 100 | 86 | 95 | 98 | 98 |
| Wear performance | 91 | 91 | 94 | 77 | 91 | 77 | 91 | 100 | 100 | 105 |

From Tables 2 and 3, it can be seen that, when a tread is formed by a rubber composition containing styrene-butadiene rubber having a styrene content of 30% by mass or less and a vinyl bond amount of 40% by mass or less in the butadiene portion and isoprene rubber as rubber components, and having a loss tangent (tan δ) measured under the conditions of frequency of 10 Hz, initial strain of 2% and dynamic strain ratio of 1% showing the peak in the range of -20°C or higher and 0°C or lower, and when the lateral groove is formed to be wider on the central portion side than on the end side, the wet grip performance in a low temperature environment is improved.

When the amount of isoprene-based rubber in 100 parts by mass of the rubber component is 20 parts by mass or more and 60 parts by mass or less, and when the peak temperature of tan δ is -15°C or higher and 0°C or lower, it can be seen that the wet grip performance in a low temperature environment is improved further. Further, even when the compounding material is appropriately selected as shown in claims 2 to 12, it can be seen that the wet grip performance in a low temperature environment is further improved.

Although the present invention has been described above based on the embodiments, the present invention is not limited to the above embodiments. Various modifications can be made to the above embodiments within the same and equal range as the present invention.

[DESCRIPTION OF THE REFERENCE NUMERALS]

3 Circumferential main groove
4 Land
5 Lateral groove
10 Branch groove
CL Center line
c Center side
e End side

## Claims

1. A pneumatic tire having a tread having two or more circumferential main grooves extending continuously in the circumferential direction of the tire, wherein

   plurality lateral grooves are formed in a land portion in the tread divided in the tire width direction by the two adjacent circumferential main grooves so as to be wider on the central portion side than on the end side;
   at least one layer of the rubber layer forming the tread is formed by a rubber composition
   which contains a styrene-butadiene rubber having a styrene content of 30% by mass or less and a vinyl bond content of 40% by mass or less in the butadiene portion and an isoprene rubber as rubber components; and
   in which the loss tangent (tan δ ) measured under the conditions of a frequency of 10 Hz, an initial strain of 2% and a dynamic strain ratio of 1% shows a maximum value (peak) in the range of -20°C or higher and 0°C or lower.

2. The pneumatic tire according to claim 1, wherein the amount of isoprene-based rubber in 100 parts by mass of the rubber component is 10 parts by mass or more and 60 parts by mass or less, in the rubber composition.

3. The pneumatic tire according to claim 2, wherein the amount of isoprene-based rubber in 100 parts by mass of the rubber component is 20 parts by mass or more and 40 parts by mass or less, in the rubber composition.

**4.** The pneumatic tire according to any one of claims 1 to 3, wherein the amount of styrene-butadiene rubber in 100 parts by mass of the rubber component is 50 parts by mass or more and 60 parts by mass or less, in the rubber composition.

**5.** The pneumatic tire according to any one of claims 1 to 4, wherein, in the rubber composition,

butadiene-based rubber is further added to the rubber component; and
amount of the butadiene-based rubber in 100 parts by mass of the rubber component is 10 parts by mass or more and 30 parts by mass or less.

**6.** The pneumatic tire according to any one of claims 1 to 5, wherein the rubber composition contains a resin component of more than 5 parts by mass and less than 40 parts by mass with respect to 100 parts by mass of the rubber component.

**7.** The pneumatic tire according to claim 6, wherein the resin component is a terpene-based resin.

**8.** The pneumatic tire according to any one of claims 1 to 7, wherein the rubber composition contains silica of 40 parts by mass or more and 200 parts by mass or less with respect to 100 parts by mass of the rubber component.

**9.** The pneumatic tire according to claim 8, wherein the silica has a nitrogen adsorption specific surface area of $150m^2/g$ or more.

**10.** The pneumatic tire according to claim 8 or 9, wherein the rubber composition contains a silane coupling agent.

**11.** The pneumatic tire according to claim 10, wherein the content of the silane coupling agent in the rubber composition is 3.0 parts by mass or more and 10.0 parts by mass or less with respect to 100 parts by mass of the rubber component.

**12.** The pneumatic tire according to claim 11, wherein the content of the silane coupling agent in the rubber composition is 4.5 parts by mass or more and 7.0 parts by mass or less with respect to 100 parts by mass of the rubber component.

**13.** The pneumatic tire according to any one of claims 10 to 12, wherein the rubber composition contains a mercapto-based silane coupling agent as a silane coupling agent.

**14.** The pneumatic tire according to any one of claims 1 to 13, wherein
the loss tangent (tan $\delta$ ) of the rubber composition measured under the conditions of a frequency of 10 Hz, an initial strain of 2%, and a dynamic strain ratio of 1% has a maximum value (peak) within a range of -15°C or higher and 0°C or lower.

**15.** The pneumatic tire according to any one of claims 1 to 14, wherein the tread is formed of plurality rubber layers; and the rubber composition is used for the cap rubber layer of the tread.

**16.** The pneumatic tire according to any one of claims 1 to 15, wherein when the width of the lateral groove on the end side of the circumferential main groove is A (mm) and the width on the center side is B (mm), $1.0 \leq B / A \leq 40.0$ is satisfied.

**17.** The pneumatic tire according to claim 16, wherein $5.0 \leqq B/A \leqq 35.0$ is satisfied.

**18.** The pneumatic tire according to any one of claims 1 to 17, wherein,
when the tire is installed on a standardized rim and the internal pressure is the standardized internal pressure, the cross-sectional width of the tire is Wt (mm) and the outer diameter is Dt (mm), $1963.4 \leq (Dt^2 \times \pi/4)/Wt \leq 2827.4$ is satisfied.

**19.** The pneumatic tire according to any one of claims 1 to 18, wherein the tire is a pneumatic tire for a passenger car.

[FIG.1]

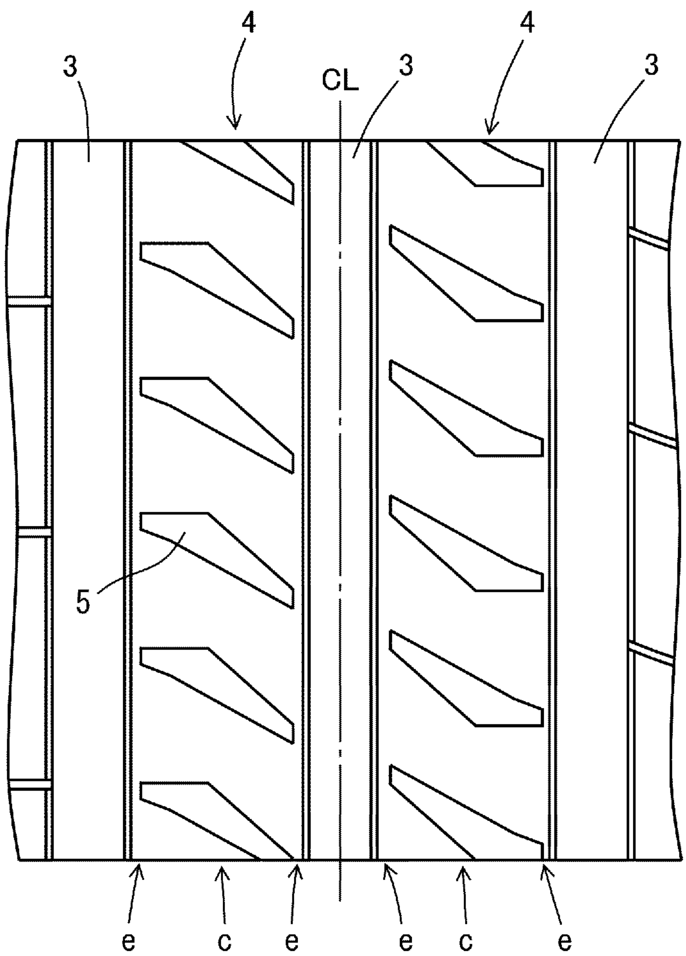

[FIG.2]

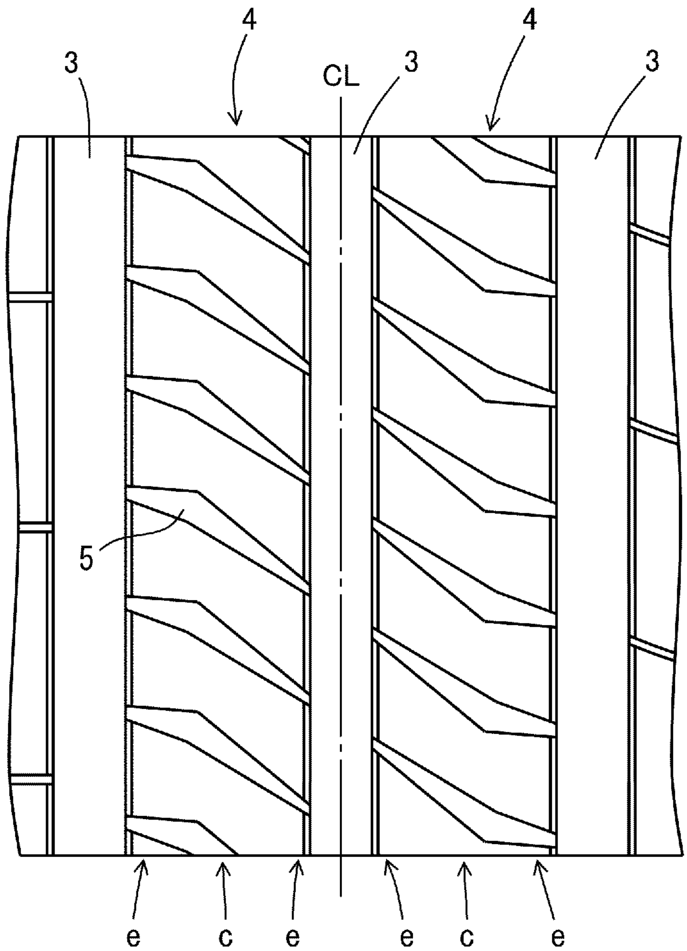

[FIG.3]

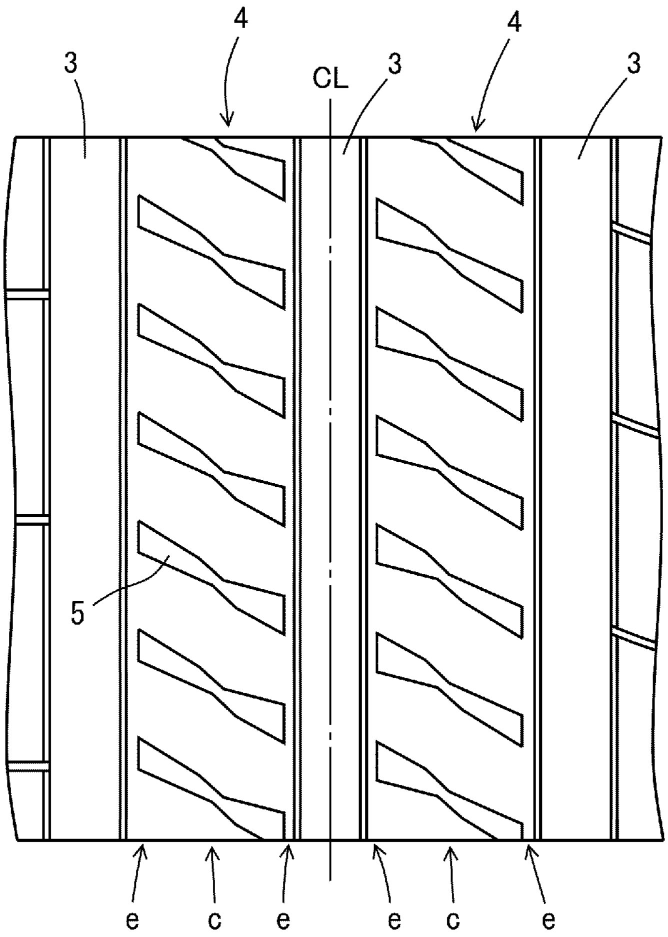


[FIG.4]

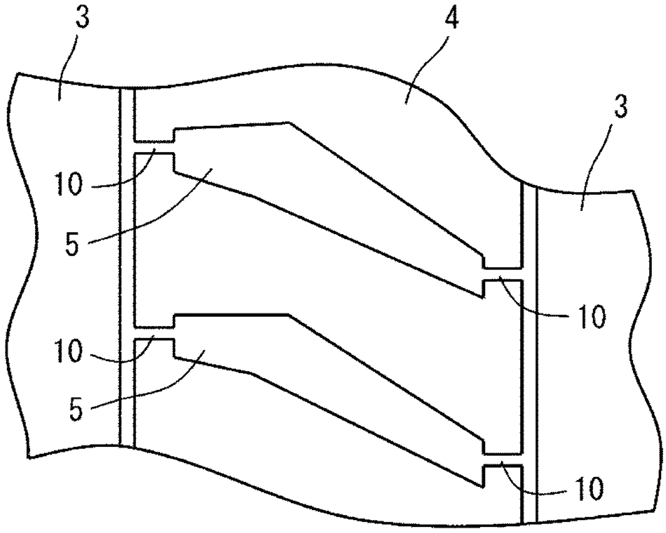

**INTERNATIONAL SEARCH REPORT**

International application No. PCT/JP2021/018657

A. CLASSIFICATION OF SUBJECT MATTER

B60C 1/00(2006.01)i; C08L 9/00(2006.01)i; B60C 11/00(2006.01)i; B60C 11/03(2006.01)i; B60C 11/13(2006.01)i

FI: B60C11/00 D; B60C1/00 A; B60C11/03 100B; B60C11/13 C; C08L9/00

According to International Patent Classification (IPC) or to both national classification and IPC

B. FIELDS SEARCHED

Minimum documentation searched (classification system followed by classification symbols)

B60C1/00; B60C11/00-11/24; C08L9/00-9/10

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2006-143804 A (SUMITOMO RUBBER INDUSTRIES, LTD.) 08 June 2006 (2006-06-08) claims, paragraph [0013], examples | 1-19 |
| A | JP 2007-197671 A (SUMITOMO RUBBER INDUSTRIES, LTD.) 09 August 2007 (2007-08-09) claims, examples | 1-19 |
| A | JP 2017-149897 A (SUMITOMO RUBBER INDUSTRIES, LTD.) 31 August 2017 (2017-08-31) claims, examples | 1-19 |
| A | JP 7-48476 A (THE YOKOHAMA RUBBER CO., LTD.) 21 February 1995 (1995-02-21) claims, paragraph [0017], examples | 1-19 |
| A | JP 2-132143 A (THE YOKOHAMA RUBBER CO., LTD.) 21 May 1990 (1990-05-21) claims, page 1, right column, lines 7-10, examples, fig. 1-3 | 1-19 |

☒ Further documents are listed in the continuation of Box C.  ☒ See patent family annex.

* Special categories of cited documents:
- "A" document defining the general state of the art which is not considered to be of particular relevance
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| 30 June 2021 (30.06.2021) | 20 July 2021 (20.07.2021) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.
PCT/JP2021/018657

C (Continuation). DOCUMENTS CONSIDERED TO BE RELEVANT

| Category* | Citation of document, with indication, where appropriate, of the relevant passages | Relevant to claim No. |
|---|---|---|
| A | JP 2020-23600 A (SUMITOMO RUBBER INDUSTRIES, LTD.) 13 February 2020 (2020-02-13) claims, paragraphs [0002], [0013], examples | 1-19 |
| A | JP 7-179669 A (SUMITOMO RUBBER INDUSTRIES, LTD.) 18 July 1995 (1995-07-18) claims, examples | 1-19 |
| A | WO 2013/099324 A1 (SUMITOMO RUBBER INDUSTRIES, LTD.) 04 July 2013 (2013-07-04) claims, paragraph [0020], examples | 1-19 |
| A | JP 10-6714 A (BRIDGESTONE CORPORATION) 13 January 1998 (1998-01-13) claims, paragraph [0018], fig. 1 | 1-19 |
| A | JP 10-29411 A (MICHELIN RECHERCHE ET TECHNIQUE S.A.) 03 February 1998 (1998-02-03) claims, drawings | 1-19 |
| A | EP 3181377 A1 (CONTINENTAL REIFEN DEUTSCHLAND GMBH) 21 June 2017 (2017-06-21) claims, fig. 1-3 | 1-19 |

Form PCT/ISA/210 (continuation of second sheet) (January 2015)

**INTERNATIONAL SEARCH REPORT**
Information on patent family members

International application No.
PCT/JP2021/018657

| Patent Documents referred in the Report | Publication Date | Patent Family | Publication Date |
|---|---|---|---|
| JP 2006-143804 A | 08 Jun. 2006 | (Family: none) | |
| JP 2007-197671 A | 09 Aug. 2007 | US 2007/0149688 A1<br>claims, examples<br>EP 1803770 A2<br>CN 1990532 A | |
| JP 2017-149897 A | 31 Aug. 2017 | (Family: none) | |
| JP 7-48476 A | 21 Feb. 1995 | (Family: none) | |
| JP 2-132143 A | 21 May 1990 | US 5227424 A<br>claims, column 3, lines 22-26, examples, fig. 1-3 | |
| JP 2020-23600 A | 13 Feb. 2020 | US 2020/0040168 A1<br>claims, paragraphs [0002], [0020], examples<br>EP 3608126 A1 | |
| JP 7-179669 A | 18 Jul. 1995 | US 5430086 A<br>claims, examples<br>EP 601611 A1 | |
| WO 2013/099324 A1 | 04 Jul. 2013 | US 2014/0329930 A1<br>claims, paragraph [0020], examples<br>EP 2787031 A1<br>CN 103987774 A | |
| JP 10-6714 A | 13 Jan. 1998 | (Family: none) | |
| JP 10-29411 A | 03 Feb. 1998 | US 5924464 A<br>claims, figures | |
| EP 3181377 A1 | 21 Jun. 2017 | DE 102015225940 A1 | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 5499769 B
- WO 2017104423 A
- JP 2017019494 A
- JP 2019199206 A
- JP 2010111753 A